## Europäisches Patentamt

(19) **European Patent Office**

Office européen des brevets

(11) Publication number: **0 076 311**
**B1**

(12) # EUROPEAN PATENT SPECIFICATION

(45) Date of publication of patent specification: **09.12.87**

(51) Int. Cl.⁴: **B 65 D 27/36**

(21) Application number: **82901464.6**

(22) Date of filing: **02.04.82**

(86) International application number:
**PCT/US82/00411**

(87) International publication number:
**WO 82/03372 14.10.82 Gazette 82/25**

(54) **EASILY OPENED AND RECLOSABLE BAG AND APPARATUS FOR MAKING SAME.**

(30) Priority: **06.04.81 US 251185**

(43) Date of publication of application:
**13.04.83 Bulletin 83/15**

(45) Publication of the grant of the patent:
**09.12.87 Bulletin 87/50**

(84) Designated Contracting States:
**AT BE CH DE FR GB LI LU NL SE**

(56) References cited:
**US-A-2 262 111**
**US-A-2 591 935**
**US-A-3 127 819**
**US-A-3 184 121**
**US-A-3 217 971**
**US-A-3 425 618**
**US-A-3 480 198**
**US-A-3 664 575**
**US-A-3 674 135**
**US-A-3 716 182**
**US-A-3 779 139**
**US-A-4 079 570**
**US-A-4 102 111**

(73) Proprietor: **MARTIN, Andrew McG.**
**Suite 3, 77 Gibbs Street**
**Brookline, MA 02146 (US)**

(72) Inventor: **MARTIN, Andrew McG.**
**Suite 3, 77 Gibbs Street**
**Brookline, MA 02146 (US)**

(74) Representative: **Madgwick, Paul Roland et al**
**Ladas & Parry Isartorplatz 5**
**D-8000 München 2 (DE)**

(56) References cited:
**US-A-4 254 601**
**US-A-4 291 520**

Courier Press, Leamington Spa, England.

## Description

This invention generally relates to the construction and manufacture of bags and more specifically to a bag structure that facilitates opening and reclosing of a bag and the apparatus for manufacturing such a bag.

Bags are used for storing a wide variety of contents and are composed of diverse materials. Although this invention can be utilized and applied to many different bags, it is particularly suited for bags that are used for packaging snack foods and the like and that are composed of thin cellophane or organic polymer base material that has limited tear resistance.

Hundreds of milions of these bags are manufactured each year. They are manufactured in a combined form-and-fill apparatus. More specifically, in such apparatus sheet material is drawn past a guide which directs the material into a tubular form surrounding a mandrel. As the material is drawn along the mandrel, an overlapping seam is formed in the material sealed by a heat or pressure sealing process. The material is thus formed into a tube as it passes over the mandrel. The material then passes heat sealing jaws that are disposed to form a transverse heat seal across the tube thereby to simultaneously "form" an upper seal in one bag and a bottom seal on an adjacent bag. When this occurs, the contents can "fill" a bag through a passage in the mandrel. The resulting bag then contains a longitudinal seal along the material seam and seals at the ends that define an hermetically sealed pouch for the contents. The sealing jaws normally also contain a mechanism for severing the completely sealed bag for subsequent shipment. This "form-and-fill" manufacturing process is widely accepted because it is reasonably simple, requires a minimal number of operations, and is reliable.

However, bags formed by this process are not without their problems as purchasers of snack or like contents of such bags are well aware. The bags can be difficult to open and do not facilitate reclosure if the contents are only partially consumed. Typically a purchaser will attempt to open a bag either by tearing through the seal or by trying to separate the seal. When an attempt is made to tear through the seal, the tear detection and length are random. The nature of the material is such that the tear could travel in any direction and depending on the force utilized to start the tear could travel for various distances. If the purchaser grabs the oppositely spaced walls of the pouch and then tries to pull the walls apart to separate the seal, a random opening also can occur. Specifically the force required to separate that seal varies widely and is not predictable. In either case, the opening procedure is not controlled or predictable. As a result, the bag oftentimes tears and is thus destroyed. Moreover, whether the bag tears or not, the operation often causes the contents to spill.

Generally these bags contain perishable contents or contents that become stale if exposed to air. If the contents of such bags are only partially consumed, it is not easy to reclose the bags thereby to preserve the freshness of the remaining contents. The open end of the bag, assuming it remains intact during the opening procedure or opening operation, can be rolled up; however, at rest the bag tends to resume its original shape and the rolled portion straightens thereby opening the bag and exposing the contents to air. Thus it is difficult to reclose the bag without some separate element.

A great deal of research and development has been expended in order to provide a bag which is easy to open and which can be simply reclosed. A number of solutions have been proposed.

Some bags have been redesigned in an attempt to solve both the opening and reclosing problems. Generally these bags include some structure for assisting or directing the tear and some separate, removable element that can be used to reclose the bag if the contents are only partially consumed. For example, U:S. Patent No. 3,184,149 discloses a resealable bag. This bag includes a sheet of flexible material having a structure for cutting through the side of the bag to expose the contents for consumption or use. If the contents are only partially utilized, a protective layer formed in a top seal portion is removed to expose a coextensive area of adhesive material. When the top of the bag is folded down against itself, the adhesive material adheres to the bottom seal to close the bag. U.S. Patent No. 3,224,640 discloses a bag having at least three walls. The contents are stored in a pouch between the first and second walls. The bag includes a tear line partially through the seal. As the top is torn off the bag, the contents are exposed. A slit is formed in the third wall to receive the top of the bag after it is folded over. U.S. Patent No. 3,618,850 discloses a bag in which a pleated foil strip is affixed to the bag just below one of the end seals. The bag is opened by tearing through the seal. The foil serves as a tear stop and guides the tear transversely across the bag. If the contents are only partially consumed, the top of the bag can be folded about a transverse axis that passes through the foil. The pleats in the foil tend to retain the folded shape of the foil and thereby keep the bag closed.

Another group of bag designs are characterized by a tear strip that can also be used to close the bag. U.S. Patent Nos. 3,311,288 and 3,426,959 disclose such bags. More specifically, a tear strip is affixed transversely across the bag into one wall in the area of the pouch. When the tear strip is pulled, it rips the bag under the tear strip and exposes the contents. Once the tear strip has been removed, it can be saved to reclose the bag by being wrapped around the bag. U.S. Patent No. 3,480,198 disclosea a bag in which a tear line is formed across the bag in one or both of the walls of the pouch inwardly of the heat seal; that is, in the walls that are separated to form the pouch. The tear line is formed by apertures

through both side walls that are fused around their circumferences so that the seal is not broken until the bag is torn along the tear line. The resulting top can then be removed to form a tie for the remaining contents of the bag. However, this action does not open the bag completely.

U.S. Patent No. 3,613,874 discloses a bag in which a pressure sensitive adhesive is applied as in U.S. Patent No. 3,184,149. A tear strip is also provided to tear away a portion of the bag; it has a fairly high tensile strength and is bonded to the film forming the bag rather strongly in such a way that the strip will not break or pull away from the film but will overcome the film's tear strength when it is pulled thereby tearing the bag. U.S. Patent No. 3,619,395 also discloses a plastic bag with a tear strip in the form of a ribbon which is pulled to tear the bag. This bag contains a releasable fastening means on the inner, opposed wall surfaces which enables the bag to be resealed.

The individual problem of facilitating the opening of these bags has also been the subject of research and devolopment. Another general approach can be characterized as providing tabs above the seal or outside the seal for facilitating the opening. These approaches are exemplified in U.S. Patent Nos. 3,397,835 and 3,419,137, and British Patent No. 620,354. In U.S. Patent No. 3,397,835, for example, a corner portion, or inset, is heat sealed and includes a tear line. When the bag is opened, the portion outside the tear line is removed; then the opposite walls of the bag in the inset, which are not sealed together, can be grasped individually to facilitate opening of the bag. Another approach has been to add structure to a bag that will limit or direct the tear tearing during opening. Folding the bag material to produce folded portions around the bag are shown in U.S. Patent No. 2,053,116. The use of transverse beads to limit the tear is shown in U.S. Patents Nos. 3,323,707 and 4,139,643. Other examples are shown in U.S. Patents Nos. 3,412,918 and 3,179,327. The use of special chemical treatments by placing a coating between the heat sealable surfaces before bonding to facilitate opening is shown in U.S. Patent No. 3,511,436.

A concept for facilitating the closure of paper bags is disclosed in U.S. Patent No. 2,023,855. Tabs are formed in one wall of the bag. This wall extends beyond the other wall and slits are formed in the other wall. On closure the extended wall is folded over the other and the tabs are then inserted through the slits; other corrsponding or analogous closures are also shown.

These various prior bag configurations have not gained wide, if any, commercial acceptance. They are all characterized by being more expensive to manufacture than a conventional bag. This added expense has not justified the acceptance of these configurations by the manufacturers of the contents that fill the bag. There are several reasons for this added expense. Many of the bags require the addition of discrete elements such as tear strips, or releasing agents. Others require special manufacturing apparatus or processes to provide multiple seals, to insert separate elements, to fold or configure the bags. Still others require an increase in the amount of bag material that is utilized to form the bag. Because of these and other reasons the industry, particularly the snack food industry, continues to package contents in a tubular bag with a longitudinal seal and two plain end seals and without any means for facilitating the opening or reclosing of the bag.

Summary of Invention

Therefore, it is an object of this invention to provide a bag that is easy to open and to reclose.

Another object of this invention is to provide an easily opened, reclosable bag that can be constructed without the addition of discrete elements to the bag.

Yet another object of this invention is to provide an easily opened, reclosable bag that can be made without special manufacturing procedures and that can be easily integrated into a manufacturing process.

Still another object of this invention is to provide an easily opened, reclosable bag that can be made without any significant increase in the amount of material in the bag.

Still another object of this invention is to provide an easily opened, reclosable bag that can be manufactured without any significant increase in expenses for materials or processing.

Still another object of this invention is to provide apparatus that adapts a conventional production facility for forming and filling bags to produce easily opened and reclosable bags.

Still yet another object of this invention is to provide apparatus for adapting conventional production of filled bags to provide an easily opened, reclosable bag without introducing any significant added expense to the manufacturing apparatus.

Still yet another object of this invention is to provide apparatus for converting a facility for producing filled sealed bags to provide easily opened, reclosable bags without requiring any significant modification to the conventional manufacturing apparatus.

According to the present invention there is provided a bag having opposite walls and at least one seal sealing the walls together in at least one location to form a closed pouch and a reclosure tie positioned adjacent the one seal formed by a pair of opposed walls which are integral extensions of the bag walls and a line of perforations through the bag walls which line extends across the bag adjacent the one seal, characterized by ridge means constituted by conforming fused-together portions of the tie walls that form a continuous integral seal ridge which extends along the tie so as to permit the tie to be separated from the remainder of the bag along the perforation line without being broken.

According to a further aspect of the invention there is provided an apparatus for manufacturing bags, said apparatus having a set of complementary sealing jaws which include in counterfacing portions thereof sealing surfaces that form at least one seal that seals the walls of the bag together in at least one location to form a closed pouch and a perforator adjacent the sealing surfaces to form a line of perforations through the bag walls that extends across the bag adjacent the one seal to define a reclosure tie separable from the pouch and a drive mechanism for bringing the counterfacing portions of the jaws together with the bag walls between them, characterized by counterfacing seal ridge-forming surfaces positioned in jaw sealing surfaces on the opposite side of the perforator from the sealing surfaces to form an integral seal ridge which extends along the tie so that the tie can be separated from the remainder of the bag without being broken.

This invention is pointed out with particularity in the appended claims. The above and further objects and advantages of this invention may be attained by referring to the following description taken in conjunction with the accompanying drawings.

FIG. 1 is a perspective view of a bag embodying the invention;

FIG. 2 depicts the heat sealing jaws for constructing the bag shown in FIG 1; and FIG. 1A is a scrap view of a portion of FIG. 1;

FIG. 3 is a perspective view of a further bag embodying the invention;

FIG. 4 is a perspective view of the bag in FIG. 3 that illustrates the easy opening feature of the bag;

FIG. 5 depicts the bag in FIG. 3 after it has been opened to illustrate one approach for reclosing the bag;

FIG. 6 is a perspective view of the bag in FIG. 3 after it has been reclosed;

FIG. 7 is a perspective view, in schematic form, of typical apparatus for automatically forming and filling the bags which apparatus is of the type that is useful in manufacturing bags in accordance with this invention.

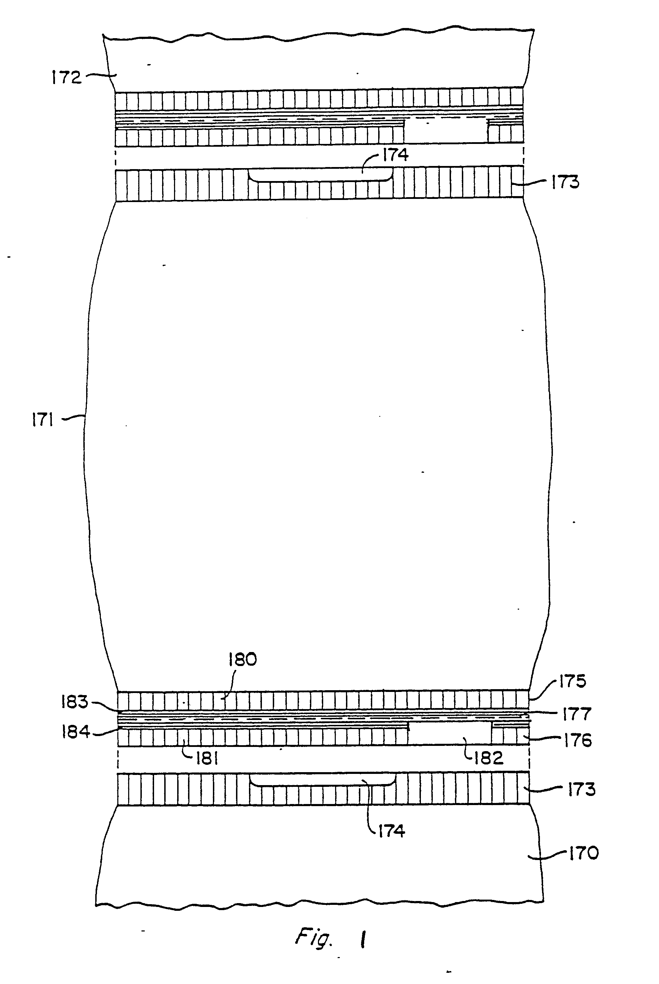

FIG. 1 depicts a succession of bags 170, 171, and 172. Referring to bag 171, a heat sealed portion 173 extends across the top of the bag. It contains an unsealed portion 174 that allows a person to open the bag readily.

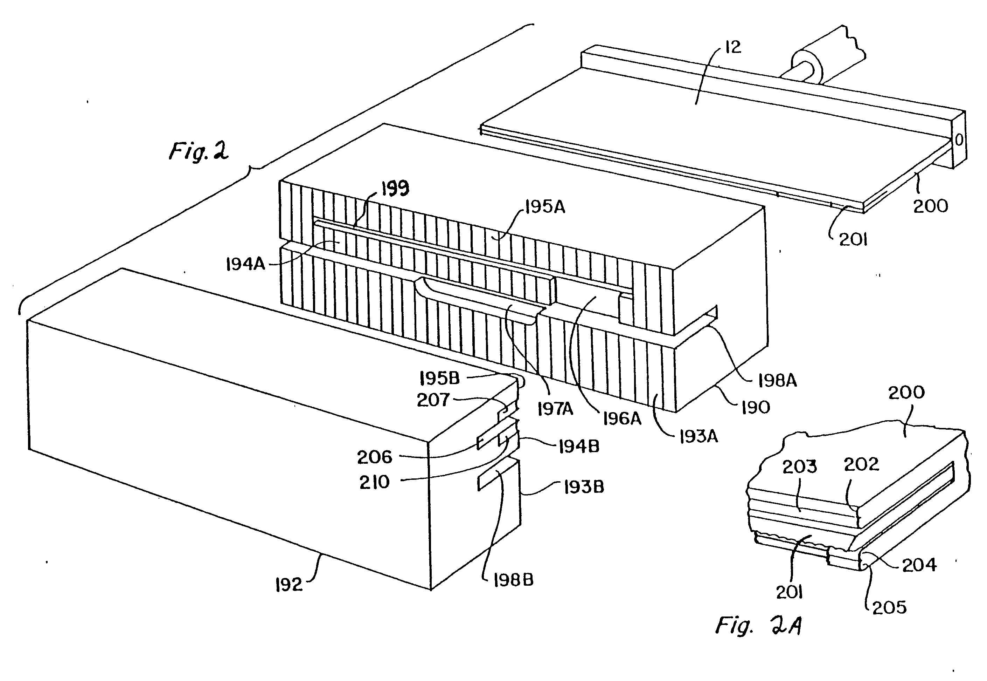

The bottom of the bag comprises a bottom seal portion 175 and a reclosure tie portion 176. The reclosure tie is torn along a perforation line 177 thereby to provide a removable reclosure tie at the bottom of the bag. Specifically the bottom seal comprises a vertically corrugated portion 180 that traverses the bag 171. The reclosure tie 176 comprises a similar vertically corrugated section 181 that extends across the bag except at a portion 182 that is not sealed. The bag 172 additionally comprises melted ridges 183 and 184 that extend across the bag contiguous the perforation line 177. In the illustrated bag, there are two ridges 183 above line 177 and two ridges 184 below that line. The structure of these melted ridges 183 and 184 will be more evident by viewing the heat sealing jaw shown in FIGS. 2 and 2A.

Referring to FIGS. 2 and 2A, jaw 190 contains three heat sealing areas 193A, 194A, and 195A that coact with corresponding faces 193B, 194B and 195B on the jaw 192. In conjunction with the recessed areas 196A and 197A they form the bag with the configuration shown in FIG. 1. A slot 198A is provided in heat sealing jaw 190 to receive a parting blade (not shown) that extends into a corresponding slot 198B in jaw 192 to separate adjacent bags, such as bag 170 from bag 171 in FIG. 1. A second blade 200 forms the perforation line 177 in FIG. 1. Blade 200 is received in a slit 199 in jaw 190.

Referring specifically to FIG. 2, a perforation blade 201 extends from blade 200 to form the perforation line. On opposite sides of blade 201 are formed outwardly rounded dies that produce the melted ridges 183 and 184. In this particular embodiment there are two heated rounded dies 202 and 203 above the perforation blade 201 and two heated rounded dies 204 and 205 below the blade 201.

The jaw 192 comprises a slot 206 that receives the perforation blade 201 and inwardly rounded anvils 207 and 210 that receive the ridge dies 202 through 205 as seen in FIG. 2.

Thus, as the bag is formed and the blade 200 is extended, the perforation blade 201 forms the perforated line 177, while the dies 200 through 205, that are heated, drive the material above and below the perforation line into the anvils 207 and 210 thereby to form the two pairs of horizontally extending melted ridges 183 and 184 that bracket the perforation line 177. The recesses 196A and 197A in jaw 190, of course, form the unsealed areas 174 and 182.

These melt ridges provide several advantages. When a person begins to tear away the reclosure tie, it is possible for the perforation to begin along the perforation line 177. However, the user rarely pulls the reclosure tie so all forces are directed along the perforation line 177. There is usually some vertical force applied with respect to the perforation line as shown in FIG. 2. To the extent that removal of the reclosure would tend to direct the tear in a vertical direction thereby either to break the bottom seal portion 180 or rip the reclosure tie 181, the tearing motion is stopped by the melted ridges 183 and 184 and redirected along the perforation line 177.

As a second advantage, removal of the reclosure tie will form nicks that constitute partial tears in the reclosure tie. When the user then reseals the bag, the stress imparted to the reclosure tie can cause these irregularities or nicks, which constitute the beginnings of tears, to stress beyond the tensile strength and thereby propagate one of the nicks as a tear through the remainder of the seal. The melted ridges in the reclosure tie obviate any tendency of a nick to propagate as a tear, because any such tear would have to transverse the thick cross sections of the melted ridges.

Finally, the melt ridges constitute a heat fused band of packaging material that is raised to a temperature below the melting point but above its sealing point. This is a stronger seal and therefore improves the bottom seal of the bag shown in FIG. 1. However, the existence of the melt ridges across the width of the reclosure tie does not adversely affect the ability of the user to separate the reclosure tie in the unsealed area 182.

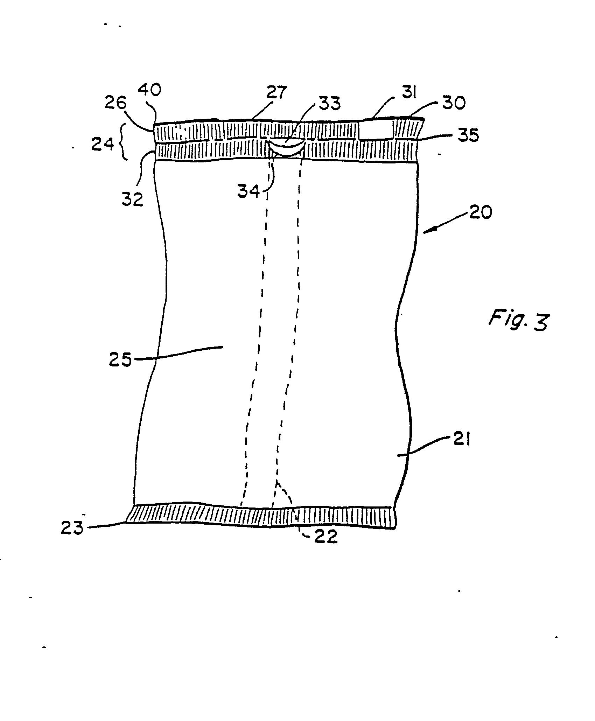

The same concept of transfer melt ridges can be applied to another type of bag as shown in FIG. 3.

FIG. 3 depicts a bag 20 that is adapted for storing snack foods as the contents.

The bag 20 is formed of a heat sealable, treated cellophane 21 or other thin organic polymer based materials. The bag 20 is formed as a tube by forming the material 21 into a cylinder and heat sealing an overlapping portion to form a longitudinal heat seal 22 that is shown in phantom. A second heat seal 23 traverses the bag 20 across the bottom thereby to close the bag at that end. A third heat seal 24, at the other end, or top, of the bag 20 provides the remaining seal and, with the end seal 23, defines a sealed pouch 25 in the bag 20.

In this particular embodiment all the structure for achieving the various objects and advantages of this invention is found in the heat seal 24. This heat seal 24 has two transverse portions. The outer transverse portion constitutes a reclosure tie 26; it has two spaced heat sealed areas 27 and 30 separated by an unsealed area 31. The reclosure tie 26 is contiguous with another heat sealed portion 32 that also extends across the width of the bag and that is formed of opposite walls of the material 21.

At the center of the heat seal 32, an outer semicircular area 33 is unsealed. This area is laterally offset from the unsealed area 31. A sealed area 34 between the unsealed area 33 and the pouch 25 maintains the integrity of the overall sealing structure. The reclosure tie 26 and seal 32 are formed integrally with the bag and are separated along a tear line 35 constituted by alternate perforations and indentations or another form of weakened line.

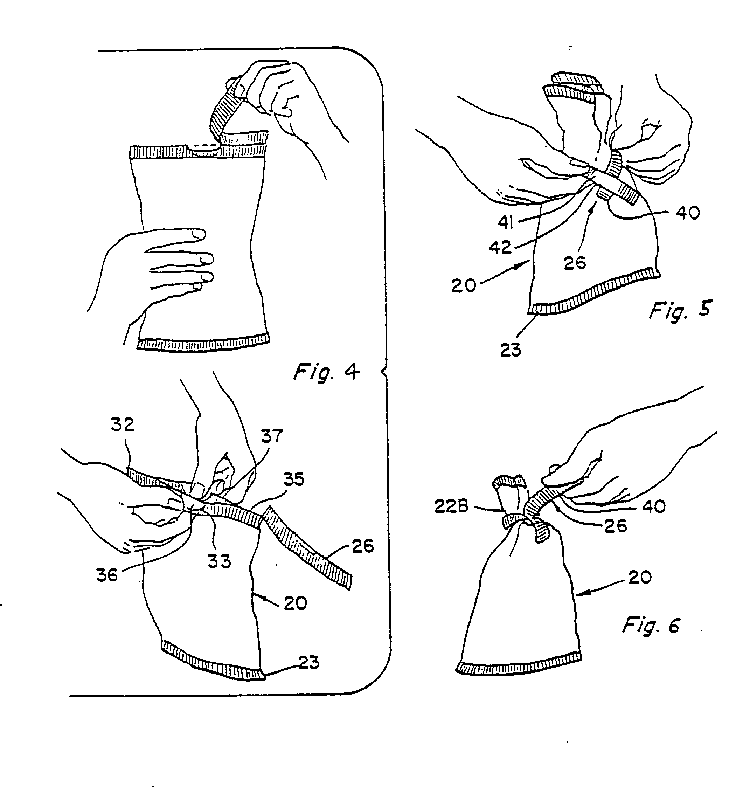

The ease with which this bag is opened can now be seen by referring to FIGS. 3 and 4, where the bottom seal 23 is shown for orientation. First the user tears the reclosure tie 26 from the bag 20 along the tear line 35. When the reclosure tie 26 is removed, the unsealed area 33 in the seal 32 is exposed. However, the removal of the closure tie 26 does not destroy the sealed pouch because the area 34 is still intact. It should also be noted that the reclosure tie 26, while in place, prevents accidental opening of the bag by blocking access to the unsealed portion 33.

When the unsealed area 33 is exposed, the opposite sides of the wall define separated tabs 36 and 37 which the user grabs in his two hands and pulls apart; this separates the walls forming the seal 32 and exposes the contents of the bag. No tearing of the bag material is required, and the tabs 36 and 37 allow a reasonably controlled separation of the seal 32 so that risks of spillage and bag damage are minimized during the opening of the bag 20.

The ease with which the reclosure is achieved can be seen by referring to FIGS. 3, 5, and 6. When only part of the contents have been consumed, the user gathers the top portion of the bag 20, as shown in FIGS. 5 and 6, and then uses the reclosure tie 26. Specifically, the user slips an end 40, that is opposite the sealed area 30, through opposite walls 41 and 42 that form the unsealed area 31. This defines a loop in the reclosure tie 26 that is placed around the gathered portion of the bag 20. The end 40 then can be pulled through the unsealed area 31 to close the loop tightly around the bag 20. The end 40 then becomes a handle. The friction between the wall portions 41 and 42 and the portion of the reclosure tie 26 extending therethrough is sufficient to lock the tie 26 and keep the bag 20 closed.

Alternatively, a user could gather the top of the bag 20 and wrap the reclosure tie 26 around the bag; the tie 26 could then be fixed merely by tying an overhand or other type of knot in the reclosure tie 26.

Referring again to FIG. 3, this bag 20 is easily opened and reclosed.

Specifically the reclosure tie 26 is formed integrally with the bag and of the same material, during the same manufacturing process. The unsealed area 33 is formed integrally with the bag 20. There are no discrete elements associated with the bag 20. The heat seal 24 can also be formed with a longitudinal dimension which corresponds to the existing heat seal dimensions in conventional bags, thereby eliminating any additional bag material. Thus, the cost of the bag shown in FIG. 3 should not be significantly different than that of a conventional bag which has neither the easy opening nor reclosure feature of the bag 20. Moreover the bag shown in FIG. 3 is adapted for production in a conventional "form-and-fill" process without any significant modification of the manufacturing apparatus.

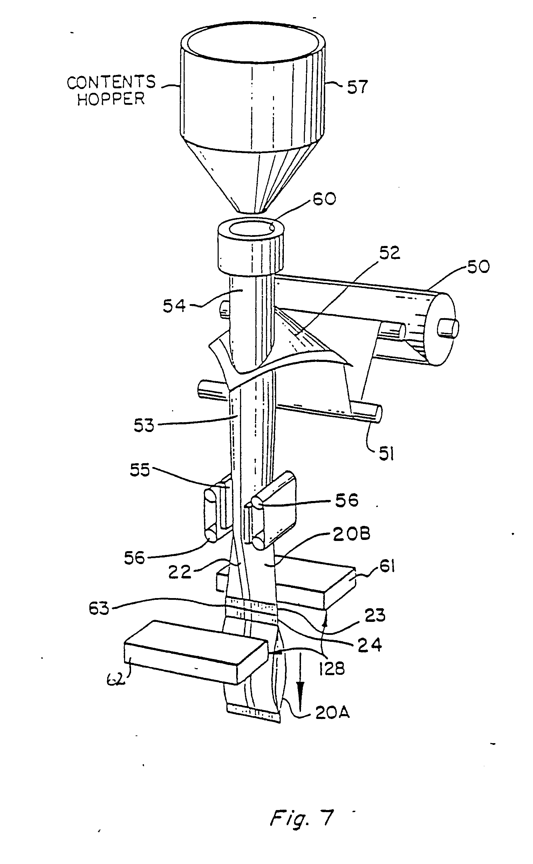

The apparatus depicted in FIG. 7 is typical of the bag making apparatus known to the art. In this apparatus, a roll of heat sealable packaging film 50 is carried past a guide roller 51 to a panning shoulder 52 that forms the film 50 into a folded, double thickness, vertically moving web 53 about a cylindrical mandrel 54. A heat seal bar 55 coacts with rollers 56 to insure formation of the longitudinal seal 22 shown in FIG. 3. As the bags pass by the lower termination of the cylinder 54, a measured amount of contents from a hopper 57 is dispensed through a cylindrical passage 60 in the mandrel 54; the contents then fall into a pouch that has been formed above the bottom seal 23 by heat sealing jaws 61 and 62, that are shown only in diagrammatic form.

More specifically, as a filled bag is drawn to the position shown by bag 20A, the sealing jaws are brought together to form the upper seal 24 in the bag 20A and the lower seal 23 in the next bag 20B to be filled. In addition the bags are perforated or cut along a line 63 that constitutes a bag separation line.

As will now be shown, it is merely necessary to substitute new sealing jaws in conventional apparatus. The controls and actuating mechanisms that are involved with the conventional heat sealing jaws remain substantially unchanged.

In summary there are disclosed two embodiments of a bag that stores contents in a sealed pouch. This bag is easily opened and easily reclosed. In both embodiments the reclosure mechanism is formed integrally with the bag and of the same material as the bag. Moreover, it is formed in the same operation by the same jaws or mechanism that forms the seals of the bag. In one of these embodiments the reclosure means is formed in the bag top seal; in the other embodiment, the reclosure means is formed in the bottom seal.

In both of these approaches the bag is constructed without the use of any more material than is currently utilized in the construction of most bags and both embodiments are readily adapted to conventional "forming-and-filling" apparatus. Equipment modifications require only a set of replacement jaws that normally will not cost much more than the conventional set of jaws and which can be replaced at a time of normal jaw replacement.

**Claims**

1. A bag having opposite walls and at least one seal (24) sealing the walls together in at least one location to form a closed pouch (25) and a reclosure tie (26) positioned adjacent the one seal (24) formed by a pair of opposed walls which are integral extensions of the bag walls and a line of perforations (35) through the bag walls which line extends across the bag adjacent the one seal, characterized by ridge means (184) constituted by conforming fused-together portions of the tie (26, 176) walls that form a continuous integral seal ridge (184) which extends along the tie (26, 176) so as to permit the tie (26, 176) to be separated from the remainder of the bag (20, 171) along the perforation line (33, 177) without being broken.

2. The bag according to claim 1, characterized by an unsealed portion (33, 174) formed at a seal (32, 173) for exposing separated bag (20, 171) wall portions (36, 37) adjacent the seal (32, 173) thereby to facilitate gripping of the separated wall portions (36, 37) to break the seal (32, 173) to gain access to the interior of the bag (20, 171).

3. The bag according to claim 2, characterized in that the unsealed portion (174) is formed at a seal (173) on the same side of the perforation line (177) as the reclosure tie (176) and extends to the perforation line (177).

4. The bag according to claim 2, characterized in that the unsealed portion (33) is located at a seal (32) on the opposite side of the perforation line (35) from the reclosure tie (26) and extends to an edge of the bag (20).

5. The bag according to claim 1, characterized by ridge means (184) comprised of short bonded-together and molded lengthwise segments of said tie (176) walls.

6. The bag according to claim 1 characterized by ridge-forming means (184) formed by relatively narrow integral bond between the tie (176) walls which extends along the tie (176) substantially parallel to the one seal (173) and a perforation line (177) that extends along the bag (171) walls between the one seal (173) and said bond.

7. The bag according to claim 1, characterized in that the walls of the closure tie (26, 176) include an unsealed portion (31, 182) that defines a loop in the tie.

8. The bag according to claim 1, characterized by a pair of seal ridges (183, 184) located on opposite sides of the perforation line (177).

9. An apparatus for manufacturing bags, said apparatus having a set of complementary sealing jaws (101, 102) which include in counterfacing portions thereof sealing surfaces that form at least one seal that seals the walls of the bag together in at least one location to form a closed pouch and a perforator (200) adjacent the sealing surfaces to form a line of perforations through the bag walls that extends across the bag adjacent the one seal to define a reclosure tie separable from the pouch and a drive mechanism for bringing the counterfacing portions of the jaws together with the bag walls between them, characterized by counterfacing seal ridge-forming surfaces (204, 205, 210) positioned in jaw sealing surfaces (194A, 194B) on the opposite side of the perforator (200, 206) from the sealing surfaces (195A, 195B) to form an integral seal ridge (184) which extends along the tie (26, 176) so that the tie (26, 176) can be separated from the remainder of the bag (20, 171) without being broken.

10. The apparatus according to claim 9, characterized by sealing surfaces (77A, 77B), (193A, 193B) that include nonsealing areas (80A, 80B), (197A, 197B) for inhibiting sealing of bag wall portions (33, 34, 174) at one seal (32, 173).

11. The apparatus according to claim 9, characterized by ridge-forming surfaces (204, 205, 210) which include nonsealing areas (196A, 196B) for inhibiting seal ridge formation in a portion of the reclosure tie to form a loop (182) therein.

**Patentansprüche**

1. Beutel mit gegenüberliegenden Wänden und mindestens einem Verschluß (24), der die Wände mindestens in einem Bereich gegeneinander abdichtet, um eine geschlossene Tasche (25) und ein zum erneuten Verschließen dienendes Band (26) zu bilden, das angrenzend an den einen Verschluß (24) angeordnet ist, der durch zwei gegenüberliegende Wände gebildet wird, die integrale Verlängerungen der Beutelwände sind, wobei Perforationen (35) durch die Beutelwände vorgesehen sind, die sich entlang einer Linie erstrecken, die quer zu dem Beutel angrenzend an den einen Verschluß verläuft, gekennzeichnet durch eine wulstartige Ausbildung (184), die sich anpassende, miteinander verschmolzene Teile der Band- (26, 176) Wände aufweist, welche eine kontinuierliche integrale abdichtende wulstartige Ausbildung (184) bilden, die sich entlang dem Band (26, 176) erstreckt, so daß das Band (26, 176) von dem Rest des Beutels (20, 171) entlang der Perforationslinie (33, 177) ohne zu zerreißen abgetrennt werden kann.

2. Beutel nach Anspruch 1, gekennzeichnet durch einen nicht abgedichteten Teil (33, 174), der an einem Verschluß (32, 173) ausgebildet ist, um getrennte Beutel- (20, 171) Wandteile (36, 37) angrenzend an den Verschluß (32, 173) freizulegen, wodurch das Ergreifen der getrennten Wandteile (36, 37) zum Öffnen des Verschlusses (32, 173) vereinfacht ist, wenn ein Zugriff zu dem Innenraum des Beutels (20, 171) erfolgt.

3. Beutel nach Anspruch 2, dadurch gekennzeichnet, daß der nicht abgedichtete Teil (174) an einem Verschluß (173) auf derselben Seite der Perforationslinie (177) wie das zum erneuten Verschließen dienende Band (176) ausgebildet ist und sich zu der Perforationslinie (177) erstreckt.

4. Beutel nach Anspruch 2, dadurch gekennzeichnet, daß der nicht abgedichtete Teil (33) an einem Verschluß (32) auf der gegenüberliegenden Seite der Perforationslinie (35) von dem zum erneuten Verschließen dienenden Band (26) vorgesehen ist und sich zu einer Kante des Beutels (20) erstreckt.

5. Beutel nach Anspruch 1, gekennzeichnet durch eine wulstartige Ausbildung (184), die kurze, anhaftend miteinander verbundene und angeformte in Längsrichtung verlaufende Segmente der Bande- (176) Wände aufweist.

6. Beutel nach Anspruch 1, gekennzeichnet durch eine wulstartige Ausbildung (184), die durch eine verhältnismäßig schmale integrale Verbindung zwischen den Band- (176) Wänden gebildet ist und sich entlang dem Band (176) im wesentlichen parallel zu dem einen Verschluß (173) erstreckt, wobei eine Perforationslinie (177) vorgesehen ist, die sich entlang den Beutel- (171) Wänden zwischen dem einen Verschluß (173) und der anhaftenden Verbindung erstreckt.

7. Beutel nach Anspruch 1, dadurch gekennzeichnet, daß die Wände des Verschlußbands (26, 176) einen nicht abgedichteten Teil (31, 182) aufweisen, der eine Schleife in dem Band bildet.

8. Beutel nach Anspruch 1, gekennzeichnet durch zwei abdichtende wulstartige Ausbildungen (183, 184), die auf gegenüberliegenden Seiten der Perforationslinie (177) vorgesehen sind.

9. Vorrichtung zur Herstellung von Beuteln, welche Vorrichtung einen Satz von komplementären Backen (101, 102) mit zueinander weisenden, zum Verschließen dienenden Oberflächen aufweist, die mindestens einen Verschluß bilden, der die Wände des Beutels in mindestens einem Bereich abdichtet, um eine geschlossene Tasche zu bilden, mit einem angrenzend an die zum Verschließen dienenden Oberflächen angeordneten Perforator (200) zur Ausbildung einer Perforationslinie durch die Beutelwände, die sich über den Beutel angrenzend an den einen Verschluß erstreckt, um ein zum erneuten Verschließen dienendes Band zu definieren, das von der Tasche abtrennbar ist, sowie mit einem Antriebsmechanismus, um die Backen gegen die dazwischen angeordneten Beutelwände gegeneinander zu bewegen, gekennzeichnet durch zueinander weisende Oberflächen (204, 205, 210) zur Ausbildung eines abdichtenden Verschlusses, die in Backenflächen (194A, 194B) zum Verschließen auf der gegenüberliegenden Seite des Perforators (200, 206) von den abdichtenden Oberflächen (195A, 195B) angeordnet sind, um einen integralen Abdichtwulst (184) zu bilden, der sich entlang dem Band (26, 176) erstreckt, so daß das Band (26, 176) von dem restlichen Teil des Beutels (20, 171) ohne zu zerreißen abgetrennt werden kann.

10. Vorrichtung nach Anspruch 9, gekennzeichnet durch zum Verschließen dienende Oberflächen (77A, 77B; 193A, 193B), die nicht verschließende Bereiche (80A, 80B; 197A, 197B) aufweisen, um ein Verschließen von Beutelwandteilen (33, 34, 174) an einem Verschluß (32, 173) zu verhindern.

11. Vorrichtung nach Anspruch 9, dadurch gekennzeichnet, daß eine wulstartige Ausbildung formende Oberflächen (204, 205, 210) vorgesehen sind, die nicht verschließende Bereiche (196A, 196B) aufweisen, um eine Ausformung einer wulstartigen Ausbildung in einem Teil des zum erneuten Verschließen dienenden Bands zu verhindern, um darin eine Schleife (182) auszubilden.

**Revendications**

1. Sachet présentant des parois opposées et au moins une soudure (24) soudant les parois l'une à l'autre en au moins un endroit pour constituer une poche fermée (25) et un lien de refermeture (26) placé près de la ou de chaque soudure (24) formé par deux parois opposées qui prolongent d'un seul tenant les parois du sachet et une ligne de perforations (35) traversant les parois du sachet laquelle ligne s'étend en travers du sachet près de la ou de chaque soudure, caractérisé par un moyen formant crête (184) constitué en conformant des parties réunies par fusion des parois du lien (26, 176) qui forment une crête intégrante continue (184) longeant le lien (26, 176) afin de permettre de le séparer du reste du sachet (20, 171) suivant la ligne de perforation (33, 177) sans qu'il se rompe.

2. Sachet selon la revendication 1, caractérisé par une partie non soudée (33, 174) prévue au niveau d'une soudure (32, 173) pour exposer des parties de paroi séparées (36, 37) du sachet (20, 171) près de la soudure (32, 173) afin qu'on puisse plus facilement agripper les parties de paroi séparées (36, 37) pour rompre la soudure (32, 173) pour accéder à l'intérieur du sachet (20, 171).

3. Sachet selon la revendication 2, caractérisé en ce que la partie non soudée (174) est prévue au niveau d'une soudure (173) située du même côté de la ligne de perforation (177) que le lien de refermeture (176) et s'étend jusqu'a la ligne de perforation (177).

4. Sachet selon la revendication 2, caractérisé en ce que la partie non soudée (33) est placée au niveau d'une soudure (32) située du côté de la ligne de perforation (35) opposée au lien de refermeture (26) et s'étend jusqu'à un bord du sachet (20).

5. Sachet selon la revendication 1, caractérisé en ce que le moyen formant crête (184) est composé de courts segments desdites parois du lien (176) liés les uns aux autres et moulés longitudinalement.

6. Sachet selon la revendication 1, caractérisé en ce que le moyen formant crête (184) est formé par une liaison intégrante relativement étroite entre les parois du lien (176) qui s'étend le long du lien (176) à peu près parallèlement à l'une des soudures (173) et par une ligne de perforation (177) qui s'étend le long des parois du sachet (171) entre l'une des soudures (173) et ladite liaison.

7. Sachet selon la revendication 1, caractérisé en ce que les parois du lien de fermeture (26, 176) comportent une partie non soudée (31, 182) qui définit une boucle dans le lien.

8. Sachet selon la revendication 1, caractérisé par deux crêtes de soudure (183, 184) situées de part et d'autre de la ligne de perforation (177).

9. Appareil pour la fabrication de sachets, ledit appareil comportant un jeu de mâchoires de soudage complémentaires (101, 102) qui comportent dans leurs parties se faisant face des surfaces de soudage qui réalisent au moins une soudure réunissant par soudage les parois du sachet en au moins un emplacement pour former une poche fermée et un perforateur (200) situé prés des surfaces de soudage pour ménager à travers les parois du sachet une ligne de perforations qui s'étend en travers du sachet près de la ou de chaque soudure pour délimiter un lien de refermeture séparable de la poche et un mécanisme d'entraînement pour amener l'une contre l'autre les parties se faisant face des mâchoires avec interposition entre elles des parois du sachet, caractérisé par des surfaces de façonnage de crête de soudage se faisant face (204, 205, 210) situées dans les surfaces de soudage des mâchoires du côté du perforateur (200, 206) opposé aux surfaces de soudage (195A, 195B) pour former une crête de soudure intégrante (184) qui longe le lien (26, 176) de façon qu'on puisse le séparer du reste du sachet (20, 171) sans qu'il se rompe.

10. Appareil selon la revendication 9, caractérisé par des surfaces de soudage (77A, 77B), (193A, 193B) qui comportent des zones de non soudage (80A, 80B), (197A, 197B) destinées à s'opposer au soudage des parties de paroi de sachet (33, 34, 174) au niveau d'une des soudures (32, 173).

11. Appareil selon la revendication 9, caractérisé par des surfaces formant crête (204, 205, 210) qui comportent des zones de non soudage (196A, 196B) destinées à s'opposer à la formation de crêtes de soudure dans une partie du lien de refermeture pour former une boucle (182) dans celui-ci.

*Fig. 1*

Fig. 2

Fig. 2A

0 076 311

Fig. 3

Fig. 4

Fig. 5

Fig. 6

CONTENTS
HOPPER — 57

60

52

50

54

53

51

55

56

56

22

20B

61

63

23

24

128

62

20A

*Fig. 7*

5